# EUROPEAN PATENT APPLICATION

(11) **EP 1 850 607 A2**
(43) Date of publication of application: **31.10.2007**
(21) Application number: 07106489.3
(22) Date of filing: 19.04.2007
(51) Int. Cl.: H04Q 7/32

(54) **Method and device for rerouting mobile phone communications**

(30) Priority: 24.04.2006 EP 06112961
(71) Applicant: Telecom en Consulting, 1930 Zaventhem (BE)
(72) Inventor: Walton, Mike, 3078, KORTENBERG (BE)
(74) Representative: Leherte, Georges M.L.M.

(57) **Abstract**

The invention relates to
a method for rerouting mobile phone communications, involving a GSM phone with a Subscriber Identification Module (SIM) allowing TCP/IP connection and with dedicated software for connection with a central server controlling a SIM Card Array comprising a plurality of SIM's and for allowing the emulation of an image of a SIM to the GSM phone, whereas a SIM Emulation functionality in the GSM phone allows bidirectional transmission over the GSM phone's TCP/IP link to and from a SIM in the remote SIM Card Array, and to
a GSM phone device comprising means to receive a Subscriber Identification Module (SIM) allowing TCP/IP connection and means for using an emulated Subscriber Identification Module (SIM) from a SIM Card Array controlled by a dedicated remote server in order to provide or assist rerouting of mobile phone communications, by bidirectional transmission over the GSM phone's TCP/IP link to and from the SIM in the remote SIM Card Array.

## Description

### Background of the invention:

GSM Mobile phone operators have a virtual monopoly over the calls made by their users. The user is able to switch to another operator by subscription or with a prepaid Subscriber Identity Module (SIM) Card, but the prices are still artificially high compared to the true cost or the fixed line cost of making a call. Local calls from a GSM mobile phone are reasonably priced but international calls and all calls when roaming are very expensive. There are tricks the user can do to offset these prices. For international calls a user can buy a (prepaid) fixed line phone card and make a local call to the prepaid phone card fixed line operator and interact with the Voice Response system to give the calling card number and the destination number to be called. When roaming to another country a user can buy a prepaid GSM SIM card in the foreign country for local calls and then use a local prepaid fixed line phone card for international calls.
Buying and using phone cards for international calls and buying and changing SIM cards when roaming is time consuming and awkward:
1. Roaming:
   For every country the user must find a shop to buy a prepaid SIM card, manually configuring the phone for the prepaid SIM card and then add credit to the card with a recharge card.
2. International calls:
   For every country the user must find a shop to buy a prepaid phone card and then dial a local number on the card enter the 12+ digit number followed by the telephone number.

A system which would allow avoiding these difficulties is therefore clearly desirable.

A system for rerouting mobile phone communications, involving a GSM phone provided with a Subscriber Identification Module (SIM) allowing TCP/IP connection, and dedicated software for connection with a central server controlling a SIM Card Array comprising a plurality of SIM's corresponding to different GSM networks, and for allowing the emulation of an image of a SIM to the GSM phone, has been described, by the authors of the present application, in the international patent application n° PCT/EP 2005/055869 which was still unpublished at the date of filing the present application.

This invention now provides for further automating and simplifying the entire process, so all the user has to do is download a program to his/her GSM phone and make a call as normal. This so called Least Cost Routing (LCR) method for international calls and SIM changing is handled automatically.

### Definitions :

**GPRS** (General Packet Radio Service) is a Wireless WAN packet-switched technology that enables high-speed wireless Internet and other data communications. GPRS is considered a "2.5G" technology, meaning it is more advanced than standard 2G digital technology, but does not meet the requirements of a full-fledged 3G technology. GPRS and 3G enable a GSM phone to communicate with any device or server on the Internet.

**SIM Card,** (Subscriber Identity Module) is a card used in a GSM phone or device. The card holds a microchip that stores information needed for the GSM phone to function. It contains an encrypted code that uniquely identifies itself to the mobile network service provider. The SIM card allows the subscriber to use the GSM service regardless of the GSM mobile phone, that is, a subscriber can remove the SIM card from mobile phone A, insert it into mobile phone B, and use any services the SIM card allows on phone B.

**SIM Card Array** is a device for central storage of, and remote access to (via the Internet) any number of SIM cards to be used by remote GSM modem/devices. SIM Card Arrays are used as a remote WEB based server in union with SIM adapter printed circuit boards (PCBs) that are connected to a Computer via USB or other cabling. The computer has a network card and an Internet connection. The SIM emulation PCB is designed so that it can be inserted into the SIM cardholder of a GSM modem/device and connected to a PC via a USB cable. When a GSM modem/device sends data to what would normally be the SIM card in the SIM cardholder, the data is sent bidirectionally over the USB cable to a local PC and from that PC via the Internet to a physical SIM card in the SIM Card Array. These systems are designed for easy manipulation of SIM cards for amongst other uses testing devices with many different SIM cards.

### Description of the invention :

The purpose of this invention is to provide a method for a conventional GSM phone to switch SIM cards automatically (when roaming to another country or network) to a SIM card local to the roamed to country or network. This is accomplished by a technique that enables a GSM phone to switch from the actual SIM card in the phone to a SIM card located in a remote SIM Card Array using the GSM phone's own internal GPRS connection. This invention is not claming inventorship for SIM Card Array technology, only to the new use of SIM Card Array technology with a roaming GSM phone.

The invention thus provides a method for rerouting mobile phone communications, involving a GSM phone provided with a Subscriber Identification Module (SIM) allowing TCP/IP connection, and dedicated software for connection with a central server controlling a SIM Card Array comprising a plurality of SIM's corresponding to different GSM networks, and for allowing the emulation of an image of a SIM to the GSM phone, involving a SIM Emulation functionality in the GSM phone allowing bidirectional transmission over the GSM phone's TCP/IP link to and from a SIM in the remote SIM Card Array.

In a first preferred embodiment of the method according to the invention, said SIM emulation functionality in particular involves electronic means capable to plug in into a card holder of the GSM phone and to receive said (actual) SIM, and designed to bidirectionally transmit all SIM communication over the GSM phone's TCP/IP link to and from a SIM in the remote SIM Card Array.

The electronic means capable to plug in into a card holder of a GSM phone may suitably comprise printed circuit means or smart card means.

In another preferred embodiment of the method according to the invention, the SIM emulation functionality in particular involves a software application in the GSM phone which redirects all data destined to said (actual) SIM and bidirectionally transmits it to a SIM in the remote SIM Card Array via the GSM phone's TCP/IP link.

In still another preferred embodiment of the method according to the invention, the SIM emulation functionality involves a smart card comprising said (actual) SIM, capable to plug in into the card holder of the GSM phone and to bidirectionally transmit all SIM communication over the GSM phone's TCP/IP link to and from a SIM in the remote SIM Card Array.

The invention also provides a GSM phone device comprising means to receive a Subscriber Identification Module (SIM) allowing TCP/IP connection and means for using an emulated Subscriber Identification Module (SIM) from a SIM Card Array controlled by a dedicated remote server in order to provide or assist rerouting of mobile phone communications, whereas said GSM phone device further comprises SIM Emulation means allowing bidirectional transmission over the GSM phone's TCP/IP link to and from a SIM in the remote SIM Card Array.

In a preferred embodiment of the GSM phone device according to the invention, the SIM emulation means in particular comprise electronic means capable to plug in into a card holder of the GSM phone and to receive said (actual) SIM, and designed to bidirectionally transmit all SIM communication over the GSM phone's TCP/IP link to and from a SIM in the remote SIM Card Array.

The electronic means capable to plug in into a card holder of the GSM phone may suitably consist of a printed circuit board or a smart card.

In another preferred embodiment of the GSM phone device according to the invention, the SIM emulation means in particular comprise a software application in the GSM phone which redirects all data destined to the SIM and bidirectionally transmits it to a SIM in the remote SIM Card Array via the GSM phone's TCP/IP link.

In still another preferred embodiment of the GSM phone device according to the invention, the SIM emulation means in particular comprise a smart card containing said (actual) SIM, capable to plug in into the card holder of the GSM phone and to bidirectionally transmit all SIM communication over the GSM phone's TCP/IP link to and from a SIM in the remote SIM Card Array.

### Detailed description of the invention

Further features and details of the invention will appear from the following more specific description of the claimed method and device, furthermore disclosing in more detail certain preferred embodiments of the invention, and from the enclosed drawings illustrating some of these preferred embodiments.

In those drawings :
Figure 1 schematically represents the steps automatically performed when a device according to (a preferred embodiment of) the invention operates in a "home country" and "travels" to a Foreign country.
Figure 2 schematically illustrates a further embodiment of the invention enabling outgoing (international) redirection through fixed line operators.

In accordance with the invention the GSM phone is equipped with a SIM Emulation Element (SIM EE) that performs the same functionality as the SIM adapter described in the SIM Card Array description above, the difference is the path to the Internet is via the GSM phone's internal GPRS connection instead of over a cable to a PC. The GSM phone also needs a conventional SIM card. When the phone is in normal operation it uses the conventional SIM Card. A custom application monitors the location of the GSM phone. When the application detects that the phone has roamed to a new country or network the application establishes an IP connection to the remote SIM Array Server using the phone's GPRS connection to the internet and sends a message to the remote SIM Card Array Server giving the SIM Array Server its roaming co-ordinates. The SIM Card Array Server finds an available SIM Card and establishes communication between the SIM Card in the SIM Card Array and the SIM Emulation Element. When this communication is established the actual SIM card in the GSM phone is disconnected and the SIM Emulation Element takes the place of the physical SIM card. The GPRS connection that was established using the physical SIM stays active for several seconds even after the SIM card has been disconnected. The SIM Emulation Element now takes over control of the GSM engine and the Network to consider the SIM in the SIM Card Array as the SIM in the phone. The application now makes a second GPRS/IP connection to the SIM Array Server and breaks the GPRS connection that was established by the physical SIM card. Now the GPRS connection and all future calls are billed to the SIM in the SIM Array Server and the physical SIM card in the GSM phone is no longer used while the GSM phone is roaming.

As indicated the software and / or hardware required for the SIM Emulation Functionality / SIM Emulation Element (SIM EE) can be designed in several ways:
1. A SIM emulation piggy back PCB that holds the conventional SIM card. It plugs into the SIM Card holder and bidirectionally transmits all SIM communication over the GSM phone's GPRS Internet link to and from a SIM card in the remote SIM Card Array.
2. Low-level GSM phone software application installed in or downloaded to the GSM phone that redirects all data destined to the SIM card and bidirectionally transmits it to a SIM card in the remote SIM Card Array via the GSM phone's GPRS Internet link.
3. A Smart Card running an application that plugs into the SIM Card holder of the GSM phone and bidirectionally transmits all SIM communication over the GSM phone's GPRS Internet link to and from a SIM card in the remote SIM Card Array. This Smart Card either contains an actual SIM in its memory as well as the low level application or it will have the actual SIM piggy-backed on to it.

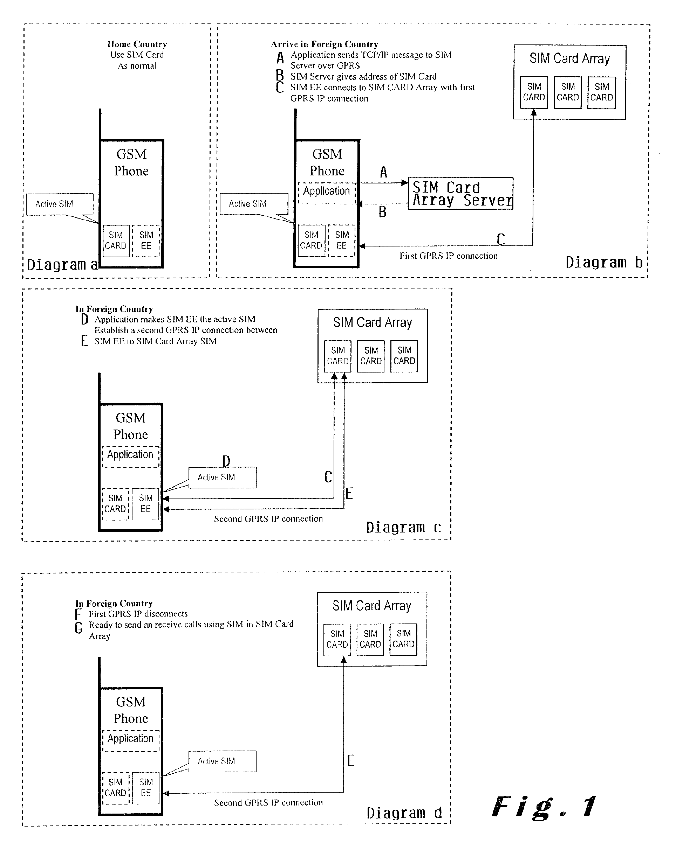

The basic operating principles of a first preferred scenario for the method according to the invention are explained in attached figure 1, illustrating
- in diagram a, the situation of the GSM phone in the home country,
- in diagram b, the steps (steps A, B, C) taking place automatically when the GSM phone arrives in a Foreign Country, and
- in diagrams c and d, the further steps (steps D, E and F, G) taking place subsequently in the foreign country as explained in more detail as follows :

### Operation Scenario 1:

Outbound calls:
   1. There are two distinct kinds of connections discussed here: first the network operator connection to the SIM, and second the GPRS IP connection.
   2. The GSM phone containing the physically present SIM and a SIM Emulation Element has a small program, the "Application".
   3. The Application will contain configuration information necessary for making GPRS connections in all countries where GPRS is available.
   4. Upon arrival in the service area of a roamed to country and/or network the GSM phone will automatically make a network operator connection to that network in order to establish basic roaming phone service using the physically present SIM.
   5. The Application will detect that the roamed to country and network does not correspond to the country and network of the physically present SIM.
   6. The Application therefore will make a GPRS IP connection via the Internet using the physically present SIM in the GSM phone to the SIM Card Array Server and send a message to the SIM Card Array Server (**step A** in diagram b of figure 1). This GPRS IP connection is billed to the account of the physically present SIM.
   7. The message contains amongst other things (Calling Line Identification of the physically present SIM, Mobile Country Code (MCC) and the Mobile Network Code (MNC) of the roamed to country and network, the GSM phone's GPRS IP address, ...).
   8. The SIM Card Array Server reads the IP message and selects an available SIM Card, within the SIM Card Array, appropriate to the country or network being roamed to.
   9. The SIM Card Array Server replies to that IP message with the IP address of the selected SIM in the SIM Card Array **(step B** in diagram b of figure 1).
   10. The Application in the GSM phone makes a new GPRS IP connection to the selected SIM in the SIM Card Array **(step C** in diagram b of figure 1 and connection **C** in diagrams b and c of figure 1). This GPRS connection is also billed to the account of the physically present SIM.
   11. The GSM phone de-activates the previously established network operator connection that used the SIM physically present in the GSM phone. During this phase the existing GPRS connection (connection **C** in diagrams b and c of figure 1) remains established for a short while even after the SIM has for all practical purposes been removed from the GSM phone.
   12. The GSM phone activates a new network operator connection to the roamed to mobile operator network **(step D** in diagram c of figure 1) using the SIM Card Array information transported by the established GRPS IP connection (connection **C** in diagram c of figure 1).
   13. The Application in the GSM phone establishes a new GPRS IP connection to the SIM in the SIM Card Array (**step E** in diagram c of figure 1) and the original GPRS connection (connection **C** in diagrams c and d of figure 1) is disconnected **(step F** in diagram d of figure 1).
   14. The new GPRS IP connection (connection **E** in diagrams c and d of figure 1) is billed to the account of the SIM in the SIM Card Array and remains active during the entire duration of roaming within the service area of this country and network (**step G** in diagram d of figure 1)
   15. Upon arrival in the service area of a new roamed to country and/or network the GSM phone will automatically or manually make a network operator connection to that network in order to establish basic roaming phone service using the selected SIM in the SIM Card Array.
   16. The active GPRS IP connection will be disconnected automatically either before or after the attempt to make a network operator connection in Step 15 here above.
   17. In either case the Application will detect that GPRS IP disconnection and re-activate the physically present SIM in order to establish basic roaming phone service using the physically present SIM.
   18. The Application will detect that the new MCC and the MNC do not correspond to the Home MCC and the Home MNC and will initiate Step 6 etc. here above.
   19. Upon returning to the home service area the GSM phone will automatically or manually make a network operator connection to that network in order to establish basic roaming phone service using the selected SIM in the SIM Card Array.
   20. The active GPRS IP connection will be disconnected automatically either before or after the attempt to make a network operator connection in Step 19 here above.
   21. The Application will detect that GPRS IP disconnection and re-activate the physically present SIM in order to establish basic phone service using the physically present SIM.
   22. In either case the Application will detect that the new MCC and the MNC do correspond to the Home MCC and the Home MNC and do nothing further.
Inbound calls:
   In Step 5 above when the Application detects that the roamed to country and network does not correspond to the country and network of the physically present SIM the Application will instruct via the GSM phone application interface the Home Mobile Network Operator to divert all incoming calls to a fixed number in the Home country. When an incoming call arrives on the fixed number in the Home country the call will be rerouted by an intelligent telephony server/switch to the number of the SIM in the SIM Card Array.

The description of this **Operation Scenario 1** of the invention, set forth here above specifies permanent GPRS IP connection to the SIM in the SIM Card Array for the duration that the GSM phone is in the roamed to country or network.

There is another possible scenario where the connection is made to the SIM Card Array only when there is an incoming or outgoing call.

### Operation Scenario 2:

In this situation the GSM phone will not be connected to the SIM Array Server all the time but will inform the SIM array Server of its IP address.

The scenario is basically the same as above except for the trigger to switch over to the SIM in the SIM Card Array. This happens at the moment the user attempts to make a phone call or a message is received from the SIM Card Array Server that there is an incoming call.

This scenario has advantages and disadvantages compared to the always-connected scenario. The advantage is it will considerably reduce the numbers of SIMs needed in the SIM array compared with the always connected scenario. The disadvantage is call set-up will take much longer and the redirected incoming call will also take longer and possibly require a voice message to be played by a voice response server "please hold you are being connected".

### Least Cost Rerouting to a Fixed line:

In still a further embodiment of the invention the method may additionally or alternatively involve the following specific aspects:
Because of the difference in the cost of local calls compared to international calls it is cost effective to make a local call to a fixed line operator and then have the fixed line operator make the international portion of the call.

Outbound calls from the GSM Phone to fixed or mobile phone numbers that are local to the Mobile Operator's Network corresponding to the active SIM in the GSM phone (this could be the physical SIM in its home network or a virtual SIM when roaming) may be made directly via the Mobile Operator's Network. Whereas international calls are routed to a Fixed Line Operator in the same area as the Mobile Operator's Network corresponding to the active SIM in the GSM phone. The local call to the fixed line operator could be via a SIM Box or a fixed phone number in the same local area as said mobile network operator.

The method of the invention may also involve, as a further specific embodiment of the general method of the invention, to provide means specifically designed to
■ Detect when a call is being made by the GSM phone,
■ Delay the GSM phone from making the call immediately,
■ Send an IP message, containing the Calling Line Identification (CLI) corresponding to the calling GSM phone, and the Dialled Number Identification (DNI) corresponding to the correspondent phone, to the LCR Server,
■ Have the LCR Server send a telephone number of the Telecom Switch (here after called the diverting number) to the GSM phone,
■ Have the GSM phone call the diverting number,
■ Have the Telecom Switch receive the call (this is the "A" leg of the call),
■ Have the Telecom Switch call the DNI corresponding to the correspondent phone (as previously sent to the LCR Server) (this is the "B" leg of the call)
■ Have the Telecom Switch connect the "A" leg and the "B" leg together so conversation may begin and billing start when the "B" leg is answered.

Specific explanation of the call diversion embodiment of the invention:

This embodiment enables an end-user to make outgoing international GSM calls with a called party (correspondent) with significant savings in comparison to calls made directly via the mobile operator.

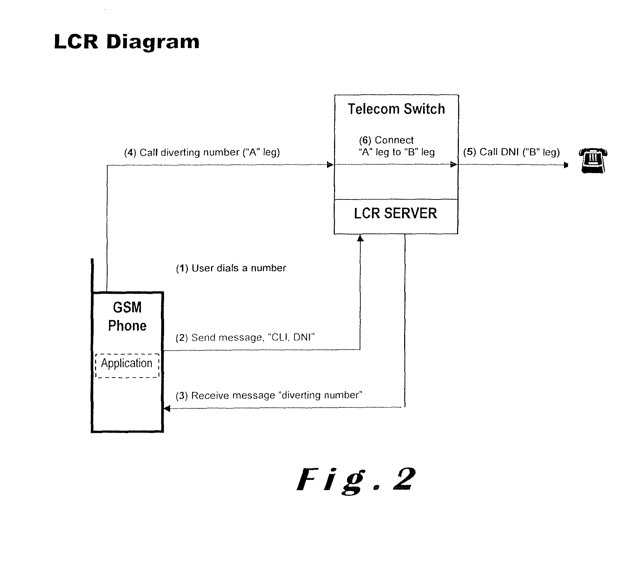

The attached diagram of figure 2 illustrates this embodiment of the method according to the invention, showing how mobile calls from a GSM phone are redirected through a fixed line operator for call termination to a correspondent.

According to the process flow shown in this diagram:
- The GSM phone needs to have Internet access (GPRS, UMTS, etc.)
- The GSM Phone Application Software Program needs to be downloaded to the GSM Phone.
- The GSM phone cannot be locked to a specific GSM operator.

The GSM Phone Application Software Program according to the invention comprises means designed to:
(1) Detect when a call is being made by the GSM phone,
(2) Delay the GSM phone from making the call immediately,
(3) Send an IP message, containing the Calling Line Identification (CLI) corresponding to the calling GSM phone, and the Dialled Number Identification (DNI) corresponding to the Correspondent phone line, to the LCR Server,
(4) Have the LCR Server send a local fixed line number (of the Telecom switch) to the GSM phone.
(5) Have the GSM phone call the local fixed line number (of the Telecom switch) and the Telecom Switch receive the call;
(6) Have the Telecom Switch call the DNI sent in step (3) and connect the call.

### Acronym definitions

- CLI: Calling Line Identification (calling GSM phone number)
- DNI: Dialled Number Identification (Correspondent phone number)
- MNC: Mobile Network code
- MCC: Mobile Country Code
- SIM: Subscriber Identification Module SIM cards are small smart cards that fit inside phones based on the GSM technology. SIMs contain personalised information about its user including the network activation and even phone book entries.
- GSM: Digital cellular technology, extremely popular in Europe and Asia. The SIM card is a unique and essential component of GSM phones. Technically, GSM was built based on the TDMA protocol.
- GPRS: A packet switching technology for GSM networks. Advanced data transmission mode that does not require a continuous connection to the Internet, as with a standard home modem.
- 3G: Generic term for third generation mobile phone technologies.
- UMTS: The European third generation wireless standard.
- TCP-IP: Transmission Control Protocol/Internet Protocol : a group of protocols that specify how computers communicate over the Internet. All computers on the Internet need TCP/IP software. In the present context TCP/IP encompasses any method of "packetising" data, including for example UDP.

## Claims

1. Method for rerouting mobile phone communications, involving a GSM phone provided with a Subscriber Identification Module (SIM) allowing TCP/IP connection, and dedicated software for connection with a central server controlling a SIM Card Array comprising a plurality of SIM's corresponding to different GSM networks, and for allowing the emulation of an image of a SIM to the GSM phone, **characterised in that** the method involves a SIM Emulation functionality in the GSM phone allowing bidirectional transmission over the GSM phone's TCP/IP link to and from a SIM in the remote SIM Card Array.

2. Rerouting method according to claim 1, **characterised in that** the SIM emulation functionality involves electronic means capable to plug in into a card holder of the GSM phone and to receive said (actual) SIM, and designed to bidirectionally transmit all SIM communication over the GSM phone's TCP/IP link to and from a SIM in the remote SIM Card Array.

3. Rerouting method according to claim 2, **characterised in that** the electronic means capable to plug in into a card holder of a GSM phone comprise printed circuit means or smart card means.

4. Rerouting method according to claim 1, **characterised in that** the SIM emulation functionality involves a software application in the GSM phone which redirects all data destined to said (actual) SIM and bidirectionally transmits it to a SIM in the remote SIM Card Array via the GSM phone's TCP/IP link.

5. Rerouting method according to claim 1, **characterised in that** the SIM emulation functionality involves a smart card comprising said (actual) SIM, capable to plug in into the card holder of the GSM phone and to bidirectionally transmit all SIM communication over the GSM phone's TCP/IP link to and from a SIM in the remote SIM Card Array.

6. GSM phone device comprising means to receive a Subscriber Identification Module (SIM) allowing TCP/IP connection and means for using an emulated Subscriber Identification Module (SIM) from a SIM Card Array controlled by a dedicated remote server in order to provide or assist rerouting of mobile phone communications, **characterised in that** the GSM phone device comprises SIM Emulation means allowing bidirectional transmission over the GSM phone's TCP/IP link to and from a SIM in the remote SIM Card Array.

7. GSM phone device according to claim 6, **characterised in that** the SIM emulation means comprise electronic means capable to plug in into a card holder of the GSM phone and to receive said (actual) SIM, and designed to bidirectionally transmit all SIM communication over the GSM phone's TCP/IP link to and from a SIM in the remote SIM Card Array.

8. GSM phone device according to claim 7, **characterised in that** said electronic means capable to plug in into a card holder of the GSM phone consist of a printed circuit board or a smart card.

9. GSM phone device according to claim 6, **characterised in that** the SIM emulation means comprise a software application in the GSM phone which redirects all data destined to the SIM and bidirectionally transmits it to a SIM in the remote SIM Card Array via the GSM phone's TCP/IP link.

10. GSM phone device according to claim 6, **characterised in that** the SIM emulation means comprise a smart card containing said (actual) SIM, capable to plug in into the card holder of the GSM phone and to bidirectionally transmit all SIM communication over the GSM phone's TCP/IP link to and from a SIM in the remote SIM Card Array.
